# EUROPEAN PATENT APPLICATION

(11) **EP 2 693 438 A1**
(43) Date of publication of application: **05.02.2014**
(21) Application number: 13167994.6
(22) Date of filing: 16.05.2013
(51) Int. Cl.: G11B 27/11, G06F 9/445

(54) **Methods and apparatuses for reproducing and recording a discless application and information storage medium for recording the discless application**

(30) Priority: 03.08.2012 KR 20120085392
(71) Applicant: Samsung Electronics Co., Ltd, Gyeonggi-do 443-742 (KR)
(72) Inventor: Yang, Jong-ho, Gyeonggi-do (KR); Bak, Bong-gil, Gyeonggi-do (KR)
(74) Representative: Instone, Terry

(57) **Abstract**

Methods and apparatuses for reproducing and recording a discless application that is not dependent on the presence of a disc, are provided. A non-transitory computer readable information storage medium includes discless application data including program data which corresponds to a discless application that is not recorded in the disc and a discless application description (DAD) used to access the program data, wherein the discless application data comprises life cycle information which indicates that a life cycle of the discless application is not dependent on whether the disc has been loaded.

## Description

### [Technical Field]

The exemplary embodiments discussed herein relate to an apparatus for reproducing multimedia data and an application from a disc. More particularly, the exemplary embodiments relate to methods and apparatuses for reproducing and recording a discless application that is not dependent on the presence of a disc, and an information storage medium for recording the discless application.

### [Background Art]

In order to use a contents service recorded in an optical disc, such as a digital video disc (DVD) or a Blu-ray disc (BD) from a contents provider in an application platform of an apparatus for reproducing an optical disc, a process of inserting the optical disc into the apparatus and loading an application is needed. More specifically, the contents provider provides consumers with a service through the following process.

Specifically, a disc containing contents that a consumer wants to view is purchased.

Upon insertion of the disc into a reproduction apparatus, the reproduction apparatus enables an application recorded in the disc to be executed through a series of loading processes.

The enabled application provides the consumer with the latest information, such as the latest movie information, via download over a network, as well as movie contents recorded in the disc, which is provided by the contents provider.

The consumer may be provided with the latest information that was not previously recorded in the disc during a disc reproduction process. The latest information may provide assistance in, for example, purchasing other discs related to the disc of which contents stored thereon are being reproduced for the consumer.

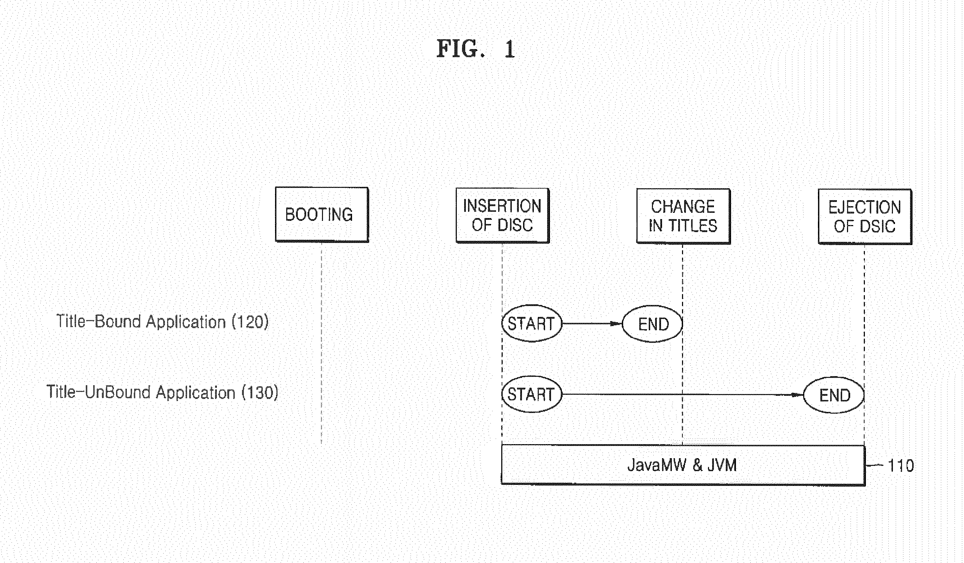

FIG. 1 shows an application life cycle on an application platform of a conventional apparatus for reproducing an optical disc.

Referring to FIG. 1, the conventional apparatus includes an application driver 110 including Java middleware (JavaMW) and a Java virtual machine (JVM). Although the conventional apparatus is booted, no application can be executed until the optical disc is inserted and the application driver 110 for executing an application is initialized. After the insertion of the optical disc and the initialization of the application driver 110 have been completed, the application may be executed by using program data recorded in the optical disc. A known apparatus manages the application life cycle based on life cycle information included in application management information.

In a case where the application is a title-bound application 120 that is subordinate to a specific title, when reproduction of the title begins, the application is enabled, and, when either reproduction of the title ends or a title change occurs in which reproduction of another title begins, the application ends. In a case where the application is a title-unbound application 130 that is not subordinate to a specific title, when reproduction of the title begins, the application is enabled, and, even when reproduction of the title ends or the title change occurs in which reproduction of another title begins, the application does not end. The application ends when the optical disc is ejected.

That is, in the application platform of a known apparatus for reproducing contents stored on the optical disc, both the title-bound application 120 and the title-unbound application 130 may be in an activation state only after the optical disc is inserted and before the optical disc is ejected. In this regard, there is an exception in a disc-unbound application in that the disc-unbound application does not end even when disc change occurs, as long as the disc change is between discs that are related to each other, such as with series discs. However, in this case, after the conventional apparatus for reproducing the optical disc has been booted, the disc-unbound application cannot be executed until the optical disc is inserted.

As described above, a consumer may be provided with a contents service only after the optical disc has been completely loaded into the conventional apparatus for reproducing contents stored in the optical disc, and a contents provider may provide the consumer with the contents service or information only after the consumer has loaded the optical disc into the known apparatus for reproducing contents stored in the optical disc. In particular, a reproduction of the optical disc is required to directly exchange information between the consumer and the contents provider. Since contents stored in the optical disc need to be reproduced all the time, such that the consumer may obtain the latest information, there was no way to obtain, from a contents provider, information of a disc that the consumer does not own.

Meanwhile, according to a recent optical disc based service, it is possible to provide the latest information or a latest application frame work based service by downloading the latest contents related to a disc and updating information which corresponds to a disc over a network during a reproduction of contents stored in the disc. However, to this end, it takes a substantial amount of time to receive the latest data over a network, record the received latest data in a reproduction apparatus, and update the information which corresponds to a disc. These operations are performed after the disc has been inserted into the reproduction apparatus, resulting in an excessive amount of time required for loading the disc.

### [Technical Solution]

The exemplary embodiments provide a method and apparatus for driving an application before a disc is not inserted into a reproduction apparatus.

The exemplary embodiments also provide a method and apparatus for allowing a contents provider and a user to exchange information when a disc is not reproduced.

The exemplary embodiments also provide a method and apparatus for reducing disc loading time by receiving data necessary for a disc update before a disc is inserted into a reproduction apparatus.

The exemplary embodiments also provide a discless application having a life cycle that is not bound to a disc.

### [Advantageous Effects]

According to the present invention, an application can be drived before a disc is not inserted into a reproduction apparatus.

### [Description of Drawings]

For a better understanding of the invention, and to show how embodiments of the same may be carried into effect, reference will now be made, by way of example, to the accompanying diagrammatic drawings in which:
FIG. 1 shows an application life cycle on an application platform of a conventional apparatus for reproducing contents stored in an optical disc;
FIG. 2 is a block diagram of a reproduction apparatus according to an exemplary embodiment;
FIG. 3 is a flowchart of a reproduction method according to an exemplary embodiment;
FIG. 4 is a block diagram of a recording apparatus according to an exemplary embodiment;
FIG. 5 is a flowchart of a recording method according to an exemplary embodiment;
FIG. 6 shows an application life cycle of a reproduction apparatus according to an exemplary embodiment;
FIG. 7 is an exemplary diagram for explaining a method of obtaining a path of a discless application data area according to an exemplary embodiment;
FIG. 8 shows a construction of discless application data according to an exemplary embodiment;
FIG. 9 shows a construction of discless application data according to another exemplary embodiment;
FIG. 10 is a table of life cycle information of a discless application according to an exemplary embodiment;
FIG. 11 is life cycle information of a discless application according to another exemplary embodiment;
FIG. 12 shows a discless application descriptor (DAD) according to an exemplary embodiment;
FIG. 13 shows a user interface according to an exemplary embodiment;
FIG. 14 shows a user interface according to another exemplary embodiment;
FIG. 15 is a flowchart which illustrates operations of a reproduction apparatus using a discless application for obtaining disc update information in advance according to an exemplary embodiment; and
FIG. 16 is a flowchart which illustrates operations of a reproduction apparatus using a discless application for providing latest information in a discless application content producer according to another exemplary embodiment.

### [Best Mode]

According to the present invention there is provided an apparatus and method as set forth in the appended claims. Other features of the invention will be apparent from the dependent claims, and the description which follows.

According to an aspect of the exemplary embodiments, there is provided an apparatus for reproducing data from a disc, the apparatus including: a storage for storing discless application data including program data which corresponds to a discless application that is not recorded in the disc and a discless application description (DAD) used to access the program data; and an application driver which executes an application recorded in the disc by using application data recorded in the disc, executing the discless application by using the discless application data stored in the storage, and controlling a life cycle of the discless application in such a manner that the life cycle of the discless application is not dependent on whether the disc has been loaded.

The application driving unit may use the DAD to generate a user interface which provides information regarding the discless application.

The application driver may use the DAD generate a user interface which controls at least one of a start and an end of at least one discless application.

The application driver may execute the discless application before the disc has been loaded.

The discless application may be an application that downloads data which is needed to update the disc.

The application driver may control communication between the application recorded in the disc and the discless application.

According to another aspect of the exemplary embodiments, there is provided an apparatus for recording a discless application that is not recorded in a disc, the apparatus including: a communicator which obtains discless application data including program data which corresponds to the discless application and a discless application description (DAD) used to access the included program data from an external apparatus; and a controller which stores the obtained discless application data in a storage of the apparatus, wherein the obtained discless application data includes life cycle information which indicates that a life cycle of the discless application is not dependent on whether the disc has been loaded.

The included program data includes an application object which includes management information regarding the discless application and at least one application program which corresponds to the discless application, wherein the life cycle information of the discless application is included in the application obj ect.

The controller stores the obtained discless application data in a predetermined area identified by identification information of a content provider.

When storing the discless application data in the predetermined area, the controller classifies and stores the obtained discless application data according to the discless application.

The DAD may include information for controlling the life cycle of the discless application, information for controlling resources, information regarding related applications, and information for configuring a user interface.

The DAD may include information used to generate a user interface which controls at least one of a start and an end of the discless application.

According to another aspect of the exemplary embodiments, there is provided a non-transitory computer readable information storage medium used by an apparatus for reproducing data from a disc, including: discless application data including program data which corresponds to a discless application that is not recorded in the disc and a discless application description (DAD) used to access the included program data, wherein the discless application data includes life cycle information which indicates that a life cycle of the discless application is not dependent on whether the disc has been loaded.

According to another aspect of the exemplary embodiments, a reproduction method is provided, where the method is performed by an apparatus for reproducing data from a disc, the method including: executing a discless application by using discless application data that is stored in a storage of the apparatus and includes program data which corresponds to the discless application that is not recorded in the disc and a discless application description (DAD) used to access the included program data; controlling a life cycle of the discless application so that the life cycle of the discless application is not dependent on whether the disc has been loaded by referring to the discless application data; and executing an application recorded in the disc after loading the disc.

According to another aspect of the exemplary embodiments, there is provided a method of recording a discless application that is not recorded in a disc, the method including: obtaining discless application data including program data which corresponds to the discless application and a DAD used to access the included program data from an external apparatus; and storing the obtained discless application data in a storage, wherein the obtained discless application data stored in the storage includes life cycle information which indicates that a life cycle of the discless application is not dependent on whether the disc has been loaded.

Another exemplary embodiment may provide an apparatus for reproducing data from a disc, the apparatus including: a storage which stores discless application data and a discless application description (DAD); and an application driver which executes an application recorded in the disc, executes the discless application by using the discless application data stored in the storage, and controls a life cycle of the discless application in such a manner that the life cycle of the discless application is not dependent upon whether the disc has been loaded. The discless application data may include program data which corresponds to the discless application, and the discless application description (DAD) may be used to access the included program data from an external apparatus.

### [Mode for Invention]

Hereinafter, the exemplary embodiments will be described in detail with reference to the attached drawings. As used herein, the term "and/or" includes any and all combinations of one or more of the associated listed items.

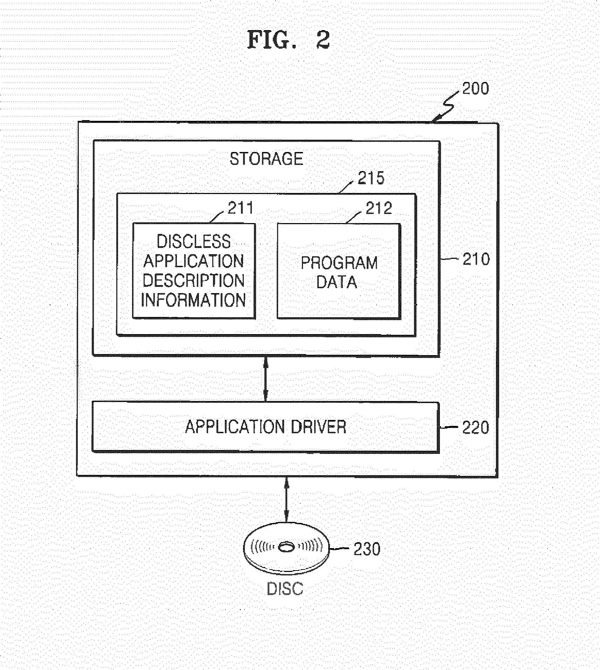

FIG. 2 is a block diagram of a reproduction apparatus 200 according to an exemplary embodiment.

Referring to FIG. 2, the reproduction apparatus 200 that reproduces contents stored in a disc 230 includes a storage 210 that is separate from the disc 230 and an application driver 220. The reproduction apparatus 200 may include a reproducer (not shown) for decoding and reproducing multimedia data recorded in the disc 230 or multimedia data received from an external apparatus.

Data 215 for driving a discless application other than a disc based application recorded in the disc 230 is stored in the storage 210. The discless application corresponds to one service provided by an application producer (a contents provider),from the standpoint of a consumer. Discless application data necessary for driving one discless application includes program data 212 including at least one application program and discless application description information 211 used to access the program data 212. The program data 212 may include the at least one application program and an application detailed description file including application management information, etc. In a case of a Blu-ray disc (BD) based application, the application program corresponds to xlet, and the application detailed description file corresponds to a BD Java object (BDJO) that is an application object. The discless application according to the exemplary embodiments may be implemented by using a program data structure of the above disc based application.

The application driver 220 is a module that executes the discless application by using the discless application data 215 stored in the storage 210, controls a life cycle of the discless application in such a manner that the life cycle of the discless application is independent of whether the disc 230 has been loaded into the disc reproducing apparatus. After the disc 230 has been loaded therein, executes the disc based application recorded in the disc 230. In a case where the discless application is a Java application, Java middleware and a Java virtual machine that are responsible for executing the Java application and controlling a life cycle thereof correspond to the application driver 220. The exemplary embodiments improve a disc platform of a given disc standard and drives the discless application as well as the disc based application.

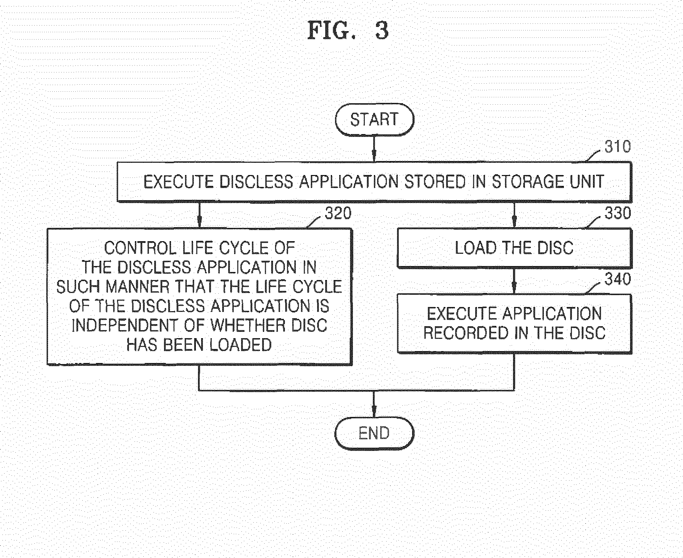

FIG. 3 is a flowchart of a method of reproduction according to an exemplary embodiment. The reproduction method is performed by the reproduction apparatus 200 that reproduces data from the disc 230.

Referring to FIGS. 2 and 3, after the reproduction apparatus 200 is completely booted and the application driver 220 is completely driven or generated, a discless application is executed by using the discless application data 215 including the program data 212 which corresponds to the discless application other than an application recorded in the disc 230 and the discless application description information 211 used to access the program data 212 (operation 310). The discless application proceeds according to a life cycle of the discless application, irrespective of whether the disc 230 has been inserted or loaded into the reproduction apparatus 200. The discless application is controlled in such a manner that the life cycle of the discless application is independent of whether the disc 230 has been loaded based on information described in the discless application data 215 (operation 320). For example, the discless application may be executed before the disc 230 is inserted, perform a predetermined operation, and exist even after the disc 230 has been ejected. After the disc 230 is loaded (operation 330), the disc based application recorded in the disc 230 is executed (operation 340). The execution of the disc based application may be performed in accordance with the standards for the corresponding disc. Communication between the discless application and the disc based application, communication between discless applications and communication between disc based applications may be performed by the application driver 220 in accordance with the above disc standards.

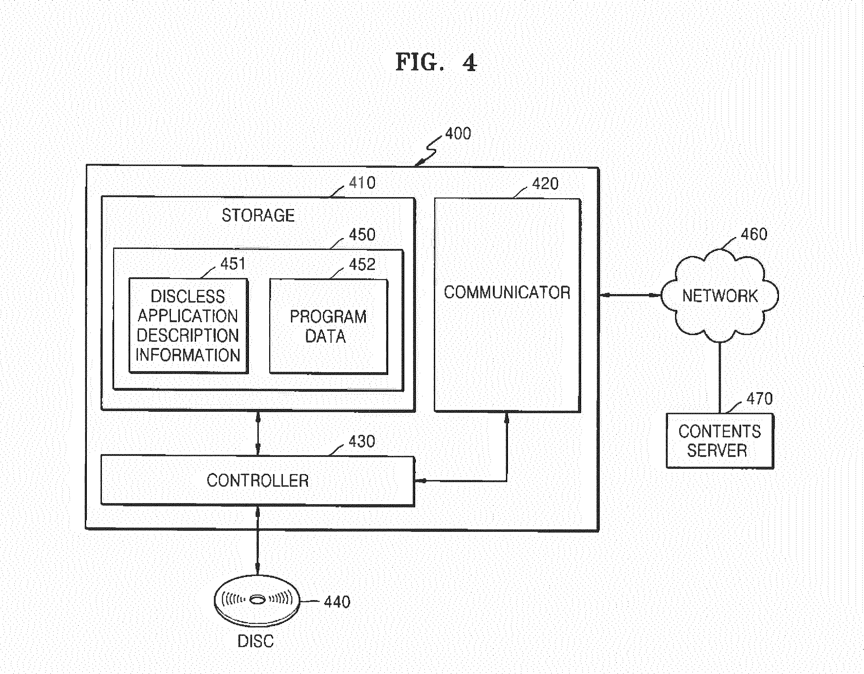

FIG. 4 is a block diagram of a recording apparatus 400 that records a discless application other than an application recorded in a disc 440, according to an exemplary embodiment.

Referring to FIG. 4, the recording apparatus 400 includes a communicator 420 that obtains discless application data 450 including program data 452 which correspond to a discless application and discless application description information 451 used to access the program data 452 from an external apparatus. Although the communicator 420 obtains the discless application data 450 from a contents server 470 over a network 460 in FIG. 4, the communicator 420 is not limited thereto. The communicator 420 may obtain the discless application data 450 from a source device other than a disc 440, such as from a storage apparatus connected to the recording apparatus 400. The recording apparatus 400 includes a controller 430 that stores the obtained discless application data 450 in a storage 410. The discless application data 450 includes life cycle information which indicates that a life cycle of the discless application is independent of loading of the disc 440. The life cycle information may be recorded in the discless application description information 451 and/or the program data 452. A structure and description of the discless application data 450, will now be described in detail.

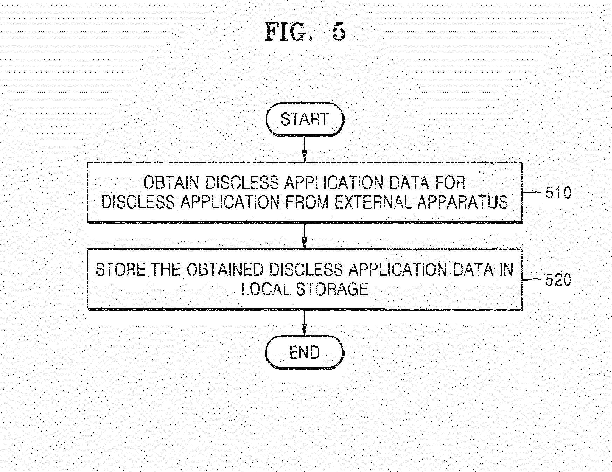

FIG. 5 is a flowchart of a method of recording a discless application other than an application recorded in a disc, according to an exemplary embodiment.

Referring to FIGS. 4 and 5, the discless application data 450, including the program data 452 which corresponds to a discless application and the discless application description information 451 used to access the program data 452 are obtained from an external apparatus other than from the disc (operation 510). The obtained discless application data 450 is stored in the storage 410 (operation 520).

Although the reproduction apparatus 200 and the recording apparatus 400, according to the exemplary embodiments, may be implemented as separate physical devices, the exemplary embodiments are not limited thereto. The reproduction apparatus 200 and the recording apparatus 400 may be implemented as a single physical device.

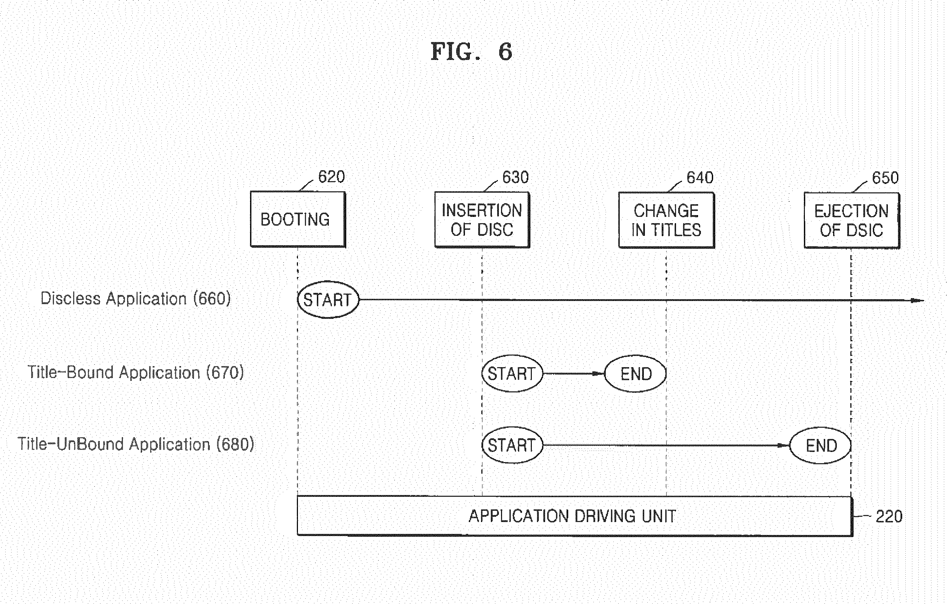

FIG. 6 shows an application life cycle of a reproduction apparatus 620 according to an exemplary embodiment.

Referring to FIG. 6, operating statuses of the reproduction apparatus may be divided into booting of the reproduction apparatus 620, an insertion of a disc 630, a change in a title 640,an ejection of the disc 650, and a termination of the reproduction apparatus (not shown). Specifically, after the reproduction apparatus 620 is booted, the application driver 220 is prepared for executing, irrespective of whether the disc is inserted. When a user inserts the disc into the reproduction apparatus, a predetermined title is reproduced. When the reproduction of the title ends or an instruction to change the title is input, the change in the title takes place, and another title is reproduced. After the disc has been ejected from the reproduction apparatus 620, when the user presses a power button, the reproduction apparatus 620 ends.

According to an exemplary embodiment, a discless application 660 may continue to run after the reproduction apparatus 620 is booted and the application driver 220 is prepared and executed until the reproduction apparatus 620 terminates or it is turned off, irrespective of whether the disc 650 is inserted or ejected. That is, the discless application 660 may perform a predetermined operation while in a state where the disc 650 is not inserted into the reproduction apparatus 620 and/or during the reproduction of the disc 650. The preparation of the application driver 220 refers to a state where a module or middleware for executing an application is executed in the reproduction apparatus 620 and thus the application can be executed by the application driving unit 220. In a case where the reproduction apparatus 620 is a Blu-ray disc reproduction apparatus, the preparation of the application driver 220 may be a state where operations of generating Java middleware and virtual machine are completed.

Meanwhile, applications recorded in the disc 650 may be classified as either a title-bound application 670 or a title-unbound application 680 and may be enabled by the application driver 220 in the same manner as the discless application 660. In a case of the title-bound application 670 in which an application is subordinate to a specific title, when reproduction of the corresponding title begins, the application is enabled, and, when reproduction of the title ends or a title change occurs in which reproduction of another title begins, the application ends. Meanwhile, in a case of the title-unbound application 680 in which the application is not subordinate to a specific title, when the corresponding title starts, the application is enabled, and, although reproduction of the title ends or the title change occurs in which reproduction of another title starts, the application does not end. When the disc is ejected, the application ends.

The discless application 660 according to the exemplary embodiments may operate based on a given optical disc application reproduction standard, such as the BD standard. That is, the given standard is extended, and the result is a discless application capable of performing a disc unbound operation in addition to the given disc bound application. Specifically, new application life cycle control information, data processing methods, data utilization methods, etc. are added to the given optical disc application reproduction standards, and thus the discless application providing a disc unbound service may be implemented.

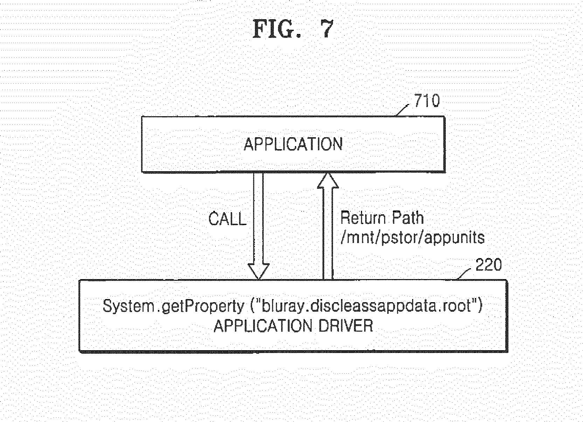

FIG. 7 is an exemplary diagram which explains a method of obtaining a path ofa discless application data area, according to an exemplary embodiment.

Data necessary for driving a discless application, i.e., discless application data, may be downloaded, from an external apparatus, in a predetermined Read/Write area to which a reproduction apparatus is accessible. An example of the Read/Write area to which the reproduction apparatus is accessible may include a non-volatile memory area in the reproduction apparatus or a storage area to which the reproduction apparatus is accessible over a network. The discless application may be obtained and/or installed by a separate application 710 executed in a recording apparatus. Examples of the application 710 may include an application recorded in a predetermined disc, a PC application or a specific discless application.

Referring to FIG. 7, the application 710 obtains a storage path of the discless application data by using a predetermined API provided by the application driver 220. An area in which the data necessary for driving the discless application is stored is referred to as a discless application data area (DADA). In FIG. 7, the application 710 submits an inquiry to the application driver 220 relating to a physical path of the DADA by using System.getProperty ("bluray.disclessappdata.root"), which is an API in property form, and obtains a path name "/mnt/pstor/appunits", which is an answer in string form.

The DADA includes at least one area for at least one application producer (contents provider). The area for each application producer includes at least one discless application unit (DAU) for discless applications provided by the each application producer. Each of the DAUs stores data necessary for driving a discless application. That is, the DAU is a unit area for a single discless application. The area for the each application producer includes a discless application descriptor (DAD) includes descriptions of a location and construction of data used to drive each of the discless applications. The application driver 220 performs an operation of enabling the corresponding discless application based on the DAD. More specifically, the application driver 220 of the reproduction apparatus 200 accesses a DAU which corresponds to each of the discless applications through a DAD file to obtain information necessary for driving each of the discless applications. The area for each of the application producers may include a separate area for storing data that is commonly used by the discless applications.

The DADA may be implemented in a hierarchy structure in folder form. An uppermost folder corresponding to the DADA is provided in a local storage of the reproduction apparatus or a storage apparatus to which the reproduction apparatus is accessible. Folders having a name comprising an organization identifier (OID) of an application producer may be generated as sub folders of the DADA folder. The folders for the application producers may be of the same number as the application producers providing discless applications. The OID is a value unique to each application producer that must not be repeated between application producers. The application driver 220 needs to prevent a discless application in an OID folder of an application producer A from accessing an OID folder of an application producer B. When a discless application which corresponds to a particular application producer is installed, a folder which corresponds to the installed discless application may be generated in the OID folder and the generated folder may have a name including an identifier of the discless application. That is, in a case where an application producer provides an N number of discless applications, an N number of DAU folders are generated in a corresponding OID folder.

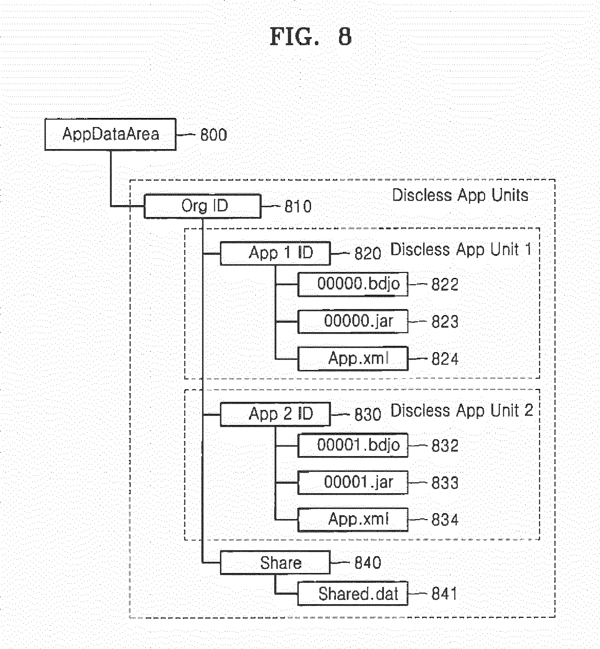

FIG. 8 shows a construction of discless application data according to an exemplary embodiment.

Referring to FIG. 8, a DADA folder 800 by the name of AppDataArea is prepared. A folder Org ID 810 for a single application producer is generated in a subordinate folder of the DADA folder 800. DAU folders App1 ID 820 and App2 ID 830 for two applications are generated in the folder OrgID 810. These folders 820 and 830 are named with identifiers of applications to distinguish them from folders of other applications. Corresponding discless application data is stored in the DAU folders App1 ID 820 and App2 ID 830.

In light of the BD standard, an application detailed description file and an application program are required to drive an application. The application detailed description file is present in a title unit, is referred to as a BDJO, and includes management information for executing the application. The application program is recorded in a jar file or in a separate file. In the exemplary embodiment of FIG. 8, a discless application employs an application structure of a given BD standard. That is, data for driving the application according to the given BD standard is stored in each DAU. 0000.bdjo 822 is a BDJO of a discless application App1 ID. 0000.bdjo 832 is a BDJO of a discless application App2 ID. 000 jar 823 and 0001.jar 833 are files in which one or more xlets consisting of the application are stored.

In addition, DAD files including descriptions of a location and construction of a file used to driving the corresponding discless application may be recorded in the App1 ID 820 and App2 ID 830. Although the DAD files regarding the two discless applications App1 ID 820 and App2 ID 830 have the same file name App.xml in 824 and 834 in FIG. 8, their DAD files may be defined as having different file names. For example, the DAD files may use file names (for example, App1 ID.xml, App2 ID.xml) including identifiers of corresponding discless applications so that descriptions files of the corresponding discless applications may be identified by using only DAD file names. The DAD file introduced by the exemplary embodiments is description information that is new to an application platform used by a given optical disc reproduction apparatus, thereby providing a way of executing an application and providing a contents service in a state where no disc is inserted, while minimizing a change in a known application platform.

Further, a separate sub area for data commonly used by discless applications may be provided in a DADA for a corresponding application producer. In FIG. 8, a subordinate folder Share 840 is provided in the folder Org ID 810, and the commonly used data is stored in a file Shared.dat 841 in the subordinate folder Share 840. However, a method of storing the commonly used data is not limited thereto. For example, a file for recording the commonly used data may be provided directly in a subordinate file of the folder Org ID 810. As another example, a plurality of areas for the commonly used data may be provided such as a folder or file for storing a common library and a file or folder for storing a common image. In this way, a discless application producer may prepare a separate area for another purpose in addition to an area for each discless application and may allow discless applications produced by the discless application producer to use data recorded in the separate area.

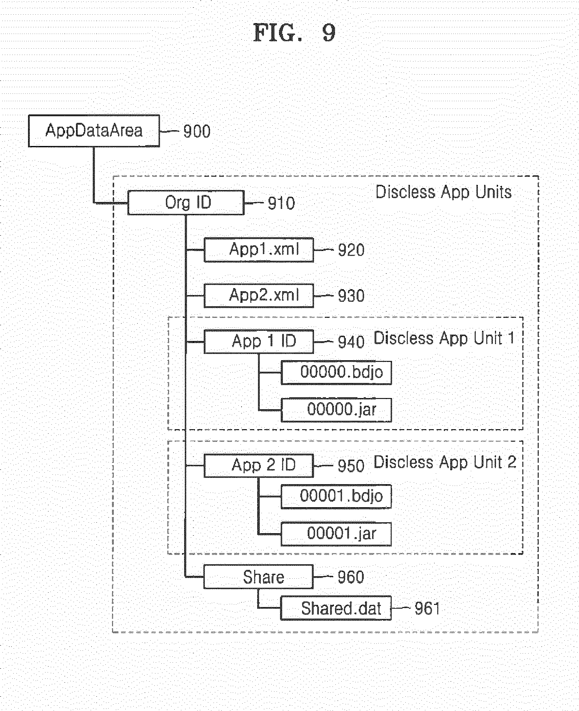

FIG. 9 shows a construction of discless application data according to another exemplary embodiment. According to an exemplary embodiment, an application producer may more freely constitute the discless application data area.

Referring to FIG. 9, similar to the exemplary embodiment of FIG. 8, a folder AppDataArea 900 corresponding to a DADA is prepared. A folder for the application producer may be generated in a subordinate folder of the folder AppDataArea 900, one by one, for each application producer. In FIG. 9, the folder Org ID 910 is generated for one application producer. DAU folders App1 ID 940 and App1 ID 950 are generated in the folder Org ID 910 for two distinguishable applications. A DAU is a unit area for a single discless application and may be implemented in a folder having a name which corresponds to an identifier of an application for a distinction from other applications. Data commonly used by discless applications is stored in a file Shared.dat 961 of a folder Share 960.

Referring to FIG. 9, a DAD is not stored in a DAU of a corresponding application, but rather it is stored in the folder Org ID 910 that is a superordinate folder. App1.xml 920 is a description file of the application App1 ID. App2.xml 930 is a description file of the application App2 ID. According to a different exemplary embodiment, a DAD file may be designated to be provided in a location other than a subordinate folder of an application producer folder. As a result, an inner structure of the application producer folder may be freely defined.

Next, a method of driving a discless application according to an exemplary embodiment in a case where the BD standard is employed will now be described. A single discless application is a single service provided by an application producer according to operations of an M number of xlets stored in the corresponding DAU. A detailed description of the M xlet consisting of the discless application is provided in a corresponding BDJO. In a case where an N number of discless applications are present in a DADA, an N number of BDJOs corresponding to the N number of discless applications may be recorded. The application driver 220 enables the N number of discless applications based on information described in the N number ofBDJOs. Based on life cycle information of the xlets described in the corresponding BDJO, the application driver 220 determines whether the xlets are to end or continue when an event such as a change in title, an ejection of a disc, etc., occurs.

A field application_binding of an application management table (AMT) including application management information corresponds to the life cycle information of the xlets. Life cycles of the xlets are controlled based on the field application_ binding. The given BD standard defines application_ binding values of "00b," "01b," "10b," and "11b." "00b" denotes a title unbound/disc unbound application. Although a current disc isejected or titles are changed, applications in which "00b" is set as the application_binding value do not end and continue to be executed. "01b" denotes a title unbound/disc bound application. An application in which "01b" is set as the application_binding value ends when the current disc is ejected. "10b" denotes a reserved value for a future use. "11b" denotes a title bound application. An application in which "11b" is set as the application_binding value ends when a current title ends or when titles are changed.

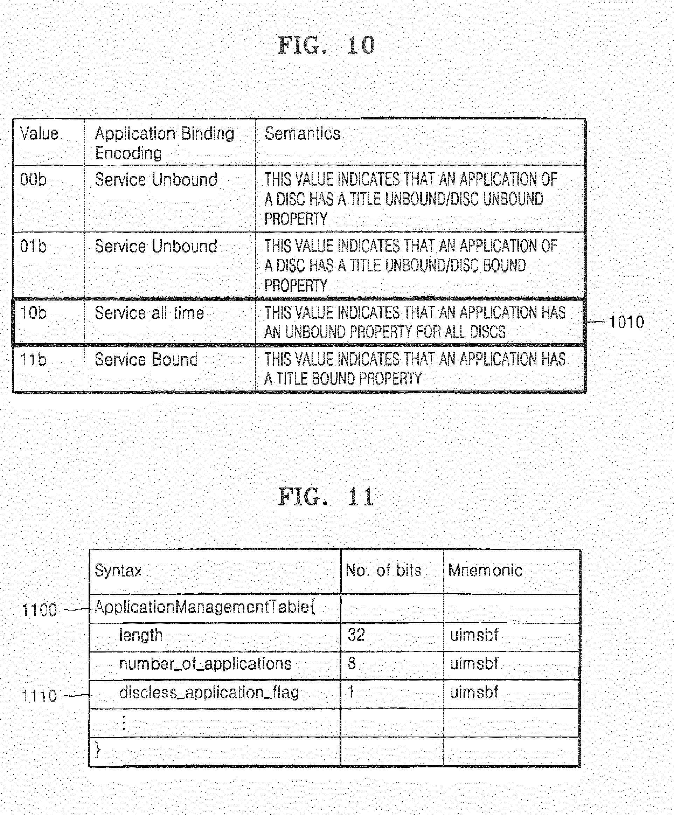

A given disc standard such as the BD standard does not define an application that continues to run irrespective of whether a disc is loaded. According to the exemplary embodiments, a discless application that can be enabled at any time after a reproduction apparatus is booted, irrespective of whether a disc is inserted or loaded, may be defined. FIGS. 10 and 11 show definitions of life cycle information for controlling a life cycle of such a discless application.

FIG. 10 is a table of life cycle information of a discless application according to an exemplary embodiment. The life cycle information of the discless application is defined by using the field application_binding that is the life cycle information of an AMT. The field application_binding is included in application_descriptor for providing supplemental data regarding each application program xlet.

Referring to FIG. 10, "10b" is used as a property value of a life cycle of a discless application that is unbounded to any discs and may be served all the time (1010). An application program having "10b" may always continue to run irrespective of whether a disc is loaded. The application driver 220 may enable or execute the application program having "10b" as an application_binding value, irrespective of whether a disc is inserted or not, in a case according to a self determination, or in a case where there is a request from a user. After the application program is enabled, although an event occurs, such as reproduction of data of the disc, reproduction of a title, and an ejection of the disc, the application driving unit 220 does not forcibly terminate the application program.

FIG. 11 is life cycle information of a discless application according to another exemplary embodiment. A predetermined field 1110 to allow all application programs described in the AMT 1100 to have life cycles that continue to run irrespective of whether a disc is loaded is added to an AMT 1100. According to an exemplary embodiment, life cycles of an entire discless application consisted of a plurality of application programs may be set to indicate that the discless application continues to run irrespective of whether a disc is loaded.

The discless application according to an exemplary embodiment may be driven by an application driver in accordance with a given disc standard, like a disc based application. For example, the discless application may be driven by Java middleware when following the given BD standard. As described above, since the discless application also operates by being registered to the middleware, the middleware may provide the discless application with various pieces of state information that are provided to the given disc based application. The discless application may operate by using the state information provided by the middleware and may minimize or end resources according to the self determination.

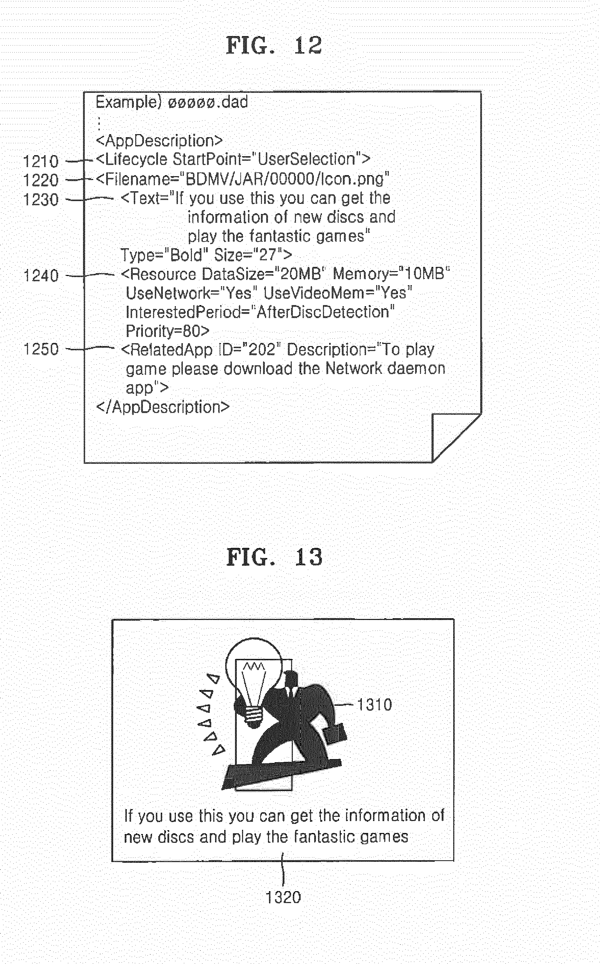

FIG. 12 shows a DAD according to an embodiment of the present invention.

A discless application producer provides a user and the application driving unit 220 with the DAD. The DAD includes information for controlling a life cycle of a discless application, information regarding resources (a network, memory, a font, etc.) used by the discless application, a description of an operation performed by the discless application, image information, information regarding a recommended operation scenario, etc. The reproduction apparatus 200 may provide a variety of services by using the DAD. Referring to FIG. 12, the DAD is recorded in a DAD file. Although the DAD file is described in an extensible Markup Language (XML) format in an exemplary embodiment, the DAD file is not limited thereto. The DAD file may use any formats capable of describing information regarding the discless application. Information items included in the DAD file are not limited to items of FIG. 12. The DAD may include information regarding a driving environment of the discless application, information for controlling the life cycle of the discless application, information thatis to be provided to the user as well as location information of a DAU. The information for controlling the life cycle of the discless application recorded in the DAD file is distinguished from life cycle information recorded in the DAU. As described above, the life cycle information recorded in the DAU is information indicating that the discless application may always continue to run, whereas the information for controlling the life cycle of the discless application recorded in the DAD file is used to set a start condition, an end condition, etc. of the discless application. FIG. 12 shows the DAD file 00000.dad in which description information regarding a discless application 00000 is recorded. The DAD file consists of a plurality of information items for describing the discless application 00000. Each of the information items may include one or more properties.

Referring to FIG. 12, an item <Lifecycle> 1210 defines a property StartPoint indicating the start condition of the discless application. A property value "UserSelection" means that the corresponding discless application starts driving according to a user's selection. The item <Lifecycle> 1210 may include other properties that are to be used by the application driving unit 220 to control a life cycle of a corresponding discless application, such as the end condition of the discless application as well as the start condition of the discless application. The discless application may always continue to run irrespective of whether a disc has been inserted into a reproduction apparatus 200, and thus the life cycle of the discless application must be controlled by the user or by the application driver 220 to start, pause, and end the discless application, when necessary. For example, in a case where available resources of the reproduction apparatus 200 are determined to be low, when a discless application that is unnecessary or has a low priority operates, the discless application needs to be terminated. The discless application is used to provide the user with additional services and thus the discless application must be enabled and terminated any time the user wishes to do so. To this end, the start condition and end condition of the discless application are designated in the item <Lifecycle> 1210.

An item <Filename> 1220 designates image data of an icon corresponding to the discless application. A guide message for the user, and font type information and font size information of the guide message are recorded in an item <Text> 1230. After the reproduction apparatus 200 is booted, the application driving unit 220 may generate and output a user interface of FIG. 13 by using an image file "Icon.png" indicated by the item <Filename> 1220 and text and style information described by the item <Text> 1230. If the user sees a guide message 1320 outputted onto a screen, obtains information regarding new discs, and as a result wants to play an interesting game indicated on the screen, the user may click an icon 1310 on the screen. The application driver 220 executes a corresponding discless application 00000 based on the item <Lifecycle> 1210 according to the user's selection.

An item <Resource> 1240 includes information regarding resources (for example, a network, memory, a font, etc.) used by the discless application. A property "DataSize" is used to designate a size of discless application data. A property "Memory" is used to designate a size of memory used by the discless application. A property "UseNetwork" is used to designate whether to use a network. A property "UserVideoMem" is used to designate whether to use video memory. A property "InterestedPeriod" is used to designate an execution time recommended by an application producer. A property "Priority" is used to designate a priority of the discless application. These items may be used to control resources of the application driver 220. In a case where the discless application requires a network connection, the application driver 220 may provide a user interface "please connect to the network to operate a corresponding application." when available memory is determined to be low, the application driver220 may determine priorities of discless applications that are being executed by using a value of the property "Priority." Based on the determination, the application driver 220 may then perform operations of terminating a discless application having a low priority, requesting a return of resources previously used by the terminated discless application having the low priority, forcibly returning resources previously used by the terminated discless application having the low priority, or changing the discless application having the low priority to a paused state. In this case, the application driver 220 requests operations that are to be performed by the discless application by using a predetermined communication method so as to allow the discless application to process operations for itself, or forcibly ends the discless application, when necessary.

An item <RelatedApp> 1250 is used to describe information regarding another discless application which is related to the discless application 00000 described by the DAD file or another application that may be concurrently driven with the discless application 00000. In FIG. 12, an ID of the related discless application is 202, and a description of the discless application 202 is designated as a property "Description." The application driver 220 may provide the user with information "please download a network demon application if you wish to play a game" by using the property "Description."

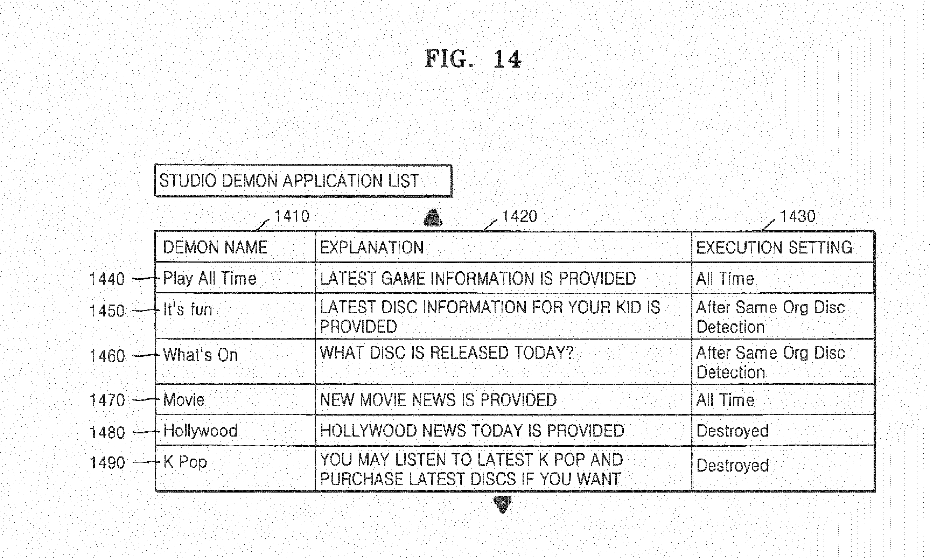

FIG. 14 shows a graphic user interface (GUI) according to another exemplary embodiment. The reproduction apparatus 200 may generate the user interface for providing information regarding available discless applications by using DAD of stored discless applications. The reproduction apparatus 200 may provide the user interface capable of controlling a life cycle of each discless application. More specifically, the application driver 220 may provide a GUI including a demon name 1410 and an explanation 1420 of a demon by using an explanation of a discless application described in the DAD. An execution setting item 1430 is used by a user to control the life cycle of each discless application. For example, a discless application 1440 having a demon name "Play All time" is used to provide latest game information and is set to be executed all the time. An application in which the execution setting item 1430 is set as "All time" is a service executed in the background all the time. Applications "It's fun" and "What's On" 1450 and 1460 are set to be executed after a disc produced by a producer of the applications 1450 and 1460 is inserted into the reproduction apparatus 200. An application "Movie" 1470 is used to provide new movie news and is set to be executed all the time. Applications "Hollywood" and "K Pop" 1480 and 1490 are currently in an end state. The user may perform operations of enabling each discless application, ending each discless application, setting a start time/condition and/or an end time/condition of each discless application through the GUI.

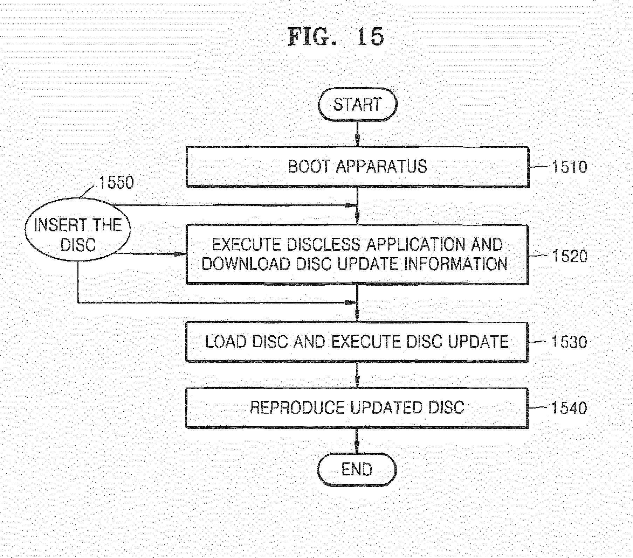

An example of the discless application is a discless application that previously receives data necessary for a disc update before a disc is inserted or loaded. Aloading time of the disc may be reduced by using the discless application. FIG. 15 is a flowchart which illustrates operations of the reproduction apparatus 200 using a discless application for obtaining disc update information in advance, according to an exemplary embodiment. Referring to FIG. 15, when the reproduction apparatus 200 is completely booted (operation 1510), i.e., after the application driver 220 included in the reproduction apparatus 200 has been driven, the discless application is executed by using information stored in a DAD (operation 1520). The executed discless application receives the disc update information from the outside and stores the disc update information in a predetermined location. A location of a source device that provides the disc update information may be designated by using a DAD file included in a DADA. A disc may be inserted by a user (operation 1550) concurrently with, before or after receiving the disc update information. The stored disc update information is used for a contents update of the disc during a disc loading process (operation 1530). After the disc has been completely updated, the updated disc is reproduced (operation 1540). As is known in the related art, after the disc has been inserted, the disc update information is downloaded during the disc loading process, which causes an increase in a disc loading time, whereas, according to the present invention, the disc update information is downloaded prior to and separately from the disc loading process, which reduces the disc loading time.

Another example of the discless application is a discless application that stores data in advance in a specific area of the reproduction apparatus 200, the stored data being necessary for updating all discs of a corresponding application producer when the discs are reproduced. The discless application may result in a reduction in the disc loading time when any of the discs of the corresponding application producer are reproduced.

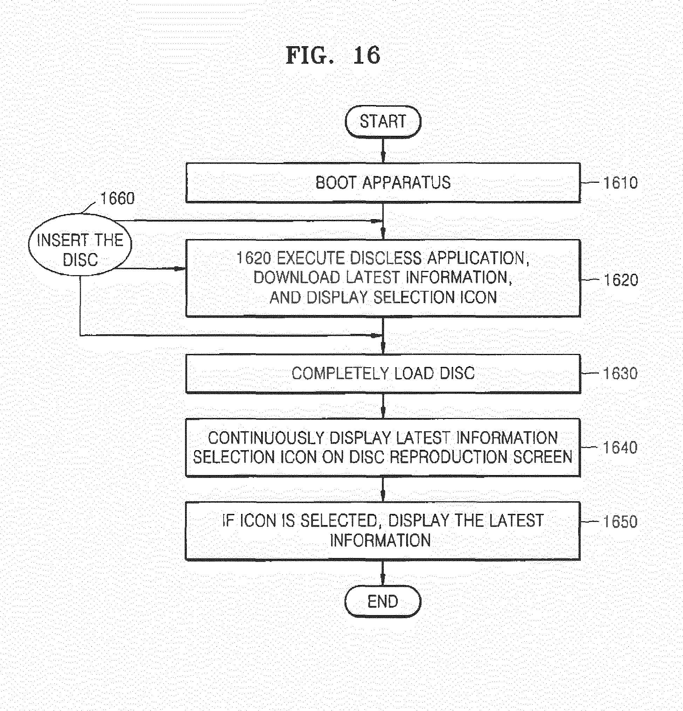

Another example of the discless application is a discless application that is continuously executed in the background after the reproduction apparatus 200 is booted and displays an icon or a selection button on a reproduction screen even during reproduction of contents stored in a disc. If the icon or the selection button is selected, the discless application that is continuously executed in the background performs a predetermined function such as providing latest information. FIG. 16 is a flowchart which illustrates operations of the reproduction apparatus 200 using a discless application for providing a user with latest information generated by an application producer, according to another exemplary embodiment. Referring to FIG. 16, after the reproduction apparatus 200 is booted (operation 1610), the application driver 200 executes the discless application based on a DAD file. The latest information is downloaded and a selection icon is displayed by the discless application (operation 1620). In operation 1620, the user may be provided with the latest information by selecting the selection icon. A disc may be inserted by the user (operation 1660) concurrently with, before or after executing the discless application. After the disc is completely loaded (operation 1630), although contents of the disc are being reproduced on a reproduction screen, the selection icon corresponding to the latest information may continue to be displayed on that same reproduction screen (operation 1640). When the user selects the icon, a user interface for providing the downloaded latest information is generated and displayed (operation 1650). The application producer may provide the user with disc unbound information or advertisement information by using the discless application.

The exemplary embodiments can also be implemented through computer readable code/instructions in/on a medium, e.g., a non-transitory computer readable storage medium. The medium can correspond to any medium/media permitting the storage and/or transmission of the computer readable code. The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as Internet transmission media. The media may also be a distributed network, so that the computer readable code is stored/transferred and executed in a distributed fashion.

Although a few preferred embodiments have been shown and described, it will be appreciated by those skilled in the art that various changes and modifications might be made without departing from the scope of the invention, as defined in the appended claims.

The exemplary embodiments should be considered in a descriptive sense only and not for purposes of limitation.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for reproducing data from a disc, the apparatus comprising:
a storage which stores discless application data including program data which corresponds to a discless application that is not recorded in the disc and a discless application description (DAD) which is used to access the program data; and
an application driver which executes an application recorded in the disc by using application data recorded in the disc, executes the discless application by using the discless application data stored in the storage, and controls a life cycle of the discless application in such a manner that the life cycle of the discless application is not dependent upon whether the disc has been loaded.

2. The apparatus of claim 1, wherein the application driver generates a user interface which provides information regarding the discless application by using the DAD.

3. The apparatus of claim 1, wherein the application driver generates a user interface for controlling at least one of a start and an end of at least one discless application by using the DAD.

4. The apparatus of claim 1, wherein the application driver executes the discless application before the disc has been loaded.

5. The apparatus of claim 1, wherein the discless application is an application that downloads data necessary for updating the disc.

6. The apparatus of claim 1, wherein the application driver controls communication between the application recorded in the disc and the discless application.

7. An apparatus for recording a discless application that is not recorded in a disc, the apparatus comprising:
a communicator which obtains discless application data including program data which corresponds to the discless application and a discless application description (DAD) used to access the included program data from an external apparatus; and
a controller which stores the obtained discless application data in a storage,
wherein the obtained discless application data comprises life cycle information which indicates that a life cycle of the discless application is not dependent on whether the disc has been loaded.

8. A non-transitory computer readable information storage medium used by an apparatus for reproducing data from a disc, the information storage medium comprising:
discless application data including program data which corresponds to a discless application that is not recorded in the disc and a discless application description (DAD) used to access the included program data,
wherein the discless application data includes life cycle information indicating that a life cycle of the discless application is not dependent on whether the disc has been loaded.

9. The non-transitory computer readable information storage medium of claim 8, wherein the included program data comprises an application object which includes management information regarding the discless application and at least one application program which corresponds to the discless application,
wherein the life cycle information of the discless application is included in the application object.

10. The non-transitory computer readable information storage medium of claim 8, wherein the discless application data is recorded in a predetermined area identified by identification information of a content provider.

11. The non-transitory computer readable information storage medium of claim 8, wherein the DAD comprises at least one of information which controls the life cycle of the discless application, information which controls resources, information regarding related applications, and information configuring a user interface.

12. The non-transitory computer readable information storage medium of claim 8, wherein the DAD comprises information used to generate a user interface which controls at least one of a start and an end of the discless application.

13. A reproduction method performed by an apparatus for reproducing data from a disc, the method comprising:
executing a discless application by using discless application data that is stored in a storage of the apparatus and includes program data which corresponds to the discless application that is not recorded in the disc and a discless application description (DAD) used to access the included program data;
controlling a life cycle of the discless application in such a manner that the life cycle of the discless application is not dependent on whether the disc has been loaded by referring to the discless application data; and
executing an application recorded in the disc after loading the disc.

14. A method of recording a discless application that is not recorded in a disc, the method comprising:
obtaining discless application data including program data which corresponds to the discless application and a discless application description (DAD) used to access the included program data from an external apparatus; and
storing the obtained discless application data in a storage,
wherein the obtained discless application data stored in the storage comprises life cycle information indicating that a life cycle of the discless application is not dependent on whether the disc has been loaded.

15. An apparatus for reproducing data from a disc, the apparatus comprising:
a storage which stores discless application data and a discless application description (DAD); and
an application driver which executes an application recorded in the disc, executes the discless application by using the discless application data stored in the storage, and controls a life cycle of the discless application in such a manner that the life cycle of the discless application is not dependent upon whether the disc has been loaded.
